# EUROPÄISCHE PATENTSCHRIFT

(11) **EP 2 093 246 B1**
(45) Veröffentlichungstag und Bekanntmachung des Hinweises auf die Patenterteilung: **14.10.2015**
(21) Anmeldenummer: 09153033.7
(22) Anmeldetag: 17.02.2009
(51) Int. Cl.: C08G 69/20, C08G 69/14, C08F 4/08, C07D 229/00, C08K 5/00

(54) **Anionische Polymerisation von Lactamen unter Verwendung spezieller Aktivatoren**
Anionic polymerisation of lactams using special activators
Polymérisation anionique de lactames en utilisant des agents d'activation spéciaux

(30) Priorität: 20.02.2008 DE 102008000352
(43) Veröffentlichungstag der Anmeldung: 26.08.2009
(73) Patentinhaber: Rhein Chemie Rheinau GmbH, 68219 Mannheim (DE)
(72) Erfinder: Kray, Bernd, 67346 Speyer (DE); Kügler, Andreas, 68199 Mannheim (DE); Laufer, Wilhelm, 67158 Ellerstadt (DE); Schuster, Peter, 67122 Altrip (DE); Wenzel, Volker, 68542 Heddesheim (DE)
(74) Vertreter: Siegers, Britta

(56) Entgegenhaltungen:
- DE-A1- 3 521 230
- DE-A1- 4 328 882
- US-A- 4 195 163
- US-A- 4 754 000
- US-A- 5 205 975
- DATABASE WPI Week 198528 Thomson Scientific, London, GB; AN 1985-167875 XP002526156 -& JP 60 096620 A (MITSUBOSHI BELTING LTD) 30. Mai 1985 (1985-05-30)
- DATABASE WPI Week 199443 Thomson Scientific, London, GB; AN 1994-347196 XP002526157 -& JP 06 271664 A (MITSUBOSHI BELTING LTD) 27. September 1994 (1994-09-27)

## Beschreibung

Die vorliegende Erfindung betrifft eine Zusammensetzung, welche bei der Herstellung von Gusspolyamiden verwendet wird, und ein Verfahren zur Herstellung von Gusspolyamiden, welches unter Verwendung der entsprechenden Zusammensetzung durchgeführt wird. Weiterer Gegenstand der vorliegenden Erfindung ist die Verwendung von spezifischen Aktivatoren und spezifischen Zusammensetzungen aus Katalysator und Aktivator zur Herstellung von Gusspolyamiden.

Es gibt im Prinzip zwei Methoden, Polyamidformkörper herzustellen. Die eine Methode besteht im Spritzgießen von bereits gefertigtem Polyamid in entsprechende Formen. Die andere Methode besteht darin, sogenannte Gusspolyamide herzustellen. Gusspolyamide sind besonders hochmolekulare Polyamide. Die Herstellung erfolgt rein chemisch und im Allgemeinen ohne Druck. Bei der Herstellung von Gusspolyamiden wird ein Lactam zusammen mit mindestens einem Katalysator und mindestens einem Aktivator in eine Form gegossen und dann in dieser Form anionisch polymerisiert. Die in der Form vorliegenden Ausgangsverbindungen polymerisieren dabei im Allgemeinen unter der Einwirkung von Wärme. Dabei entsteht ein homogener Werkstoff, welcher extrudierte Polyamide im Hinblick auf die Kristallinität übertrifft.

Gusspolyamide sind als thermoplastische Kunststoffe für die Fertigung komplexer Bauteile geeignet. Sie müssen im Gegensatz zu vielen anderen Thermoplasten nicht aufgeschmolzen werden, sondern entstehen durch eine drucklose anionische Polymerisation von einem Lactam in einer Form bei 120 bis 150 °C bereits in wenigen Minuten. Dabei können alle bekannten Gießverfahren wie Standguss, Rotations- und Schleuderguss angewendet werden; als Endprodukt erhält man jeweils Formteile aus einem hochmolekularen, kristallinen Polyamid, das sich durch ein niedriges Gewicht, eine hohe mechanische Belastbarkeit, sehr gute Gleiteigenschaften und eine hervorragende Chemikalienbeständigkeit auszeichnet und - da die Formen nicht unter Druck gefüllt werden - nur geringe innere Spannungen aufweist. Gusspolyamide lassen sich Sägen, Bohren, Fräsen, Schleifen, Verschweißen und Bedrucken oder Lackieren; neben komplexen Hohlformen werden aus diesem Polymer beispielsweise auch Rollen für Personenaufzüge und Halbzeuge wie zum Beispiel Rohre, Stäbe und Platten für den Maschinenbau und die Automobilindustrie gefertigt.

Die Herstellung von Gusspolyamidteilen, ausgehend von niedrig viskosen Lactamschmelzen und einem Katalysator sowie einem Aktivator durch die sogenannte aktivierte anionische Polymerisation ist an sich bekannt (z.B. Vieweg, Müller; Kunststoff-Handbuch Bd. VI, Carl Hansa Verlag, München, 1966). Zu diesem Zweck werden üblicherweise zwei Mischungen aus Katalysator und Lactam bzw. Aktivator und Lactam getrennt voneinander hergestellt und in der Gussform oder kurz vorher miteinander vermischt.

Ein entsprechendes Verfahren wird beispielsweise im Jahresbericht 2003 des Fraunhofer-Instituts für angewandte Polymerforschung IAP (Seite 54) zur Herstellung von Gusspolyamiden durch anionische Polymerisation von ε-Caprolactam beschrieben.

Aus der EP 0 641 816 A1 ist ein Verfahren zur Herstellung von gefülltem bzw. verstärktem Gusspolyamid bekannt, bei welchem die zur Polymerisation vorgesehenen Schmelzen in einen thixotropen Zustand versetzt werden und dann zur Polymerisation gebracht werden. Als Katalysator dient ein Alkali- oder Erdalkalilactamat und als Aktivator wird bevorzugt ein Oligomer des Hexamethylendiisocyanats verwendet.

Für die aus dem Stand der Technik bekannten Verfahren zur Herstellung von Gusspolyamid ist charakteristisch, dass, sobald das Lactam mit dem System aus Katalysator und Aktivator in Kontakt gebracht wird, die anionische Polymerisation zum Polyamid eintritt. Häufig ist es allerdings gewünscht, dass die anionische Polymerisation erst zu einem späteren, d. h. verzögerten Zeitpunkt einsetzt, beispielsweise nach dem die Ausgangsverbindungen aus Lactam und Additiven ausreichend Zeit hatten, sich homogen in einer entsprechenden Form zu durchmischen. Damit die anionische Polymerisation zu einem späteren Zeitpunkt einsetzt, ist es bisher erforderlich, entweder den Aktivator oder den Katalysator erst später zu der lactamhaltigen Eduktmischung zuzugeben. Nichts desto trotz muss dieser, zu einem späteren Zeitpunkt zugegebene Aktivator oder Katalysator in dem entsprechenden Lactam zu Beginn der anionischen Polymerisation möglichst in homogener Verteilung vorliegen. Dieses ist wiederum im Allgemeinen jedoch nur dann möglich, wenn der Katalysator und der Aktivator in homogener Form zusammen mit dem Lactam in die Form gegeben werden.

Eine Aufgabe der vorliegenden Erfindung besteht somit darin, ein System bereitzustellen, welches einen Katalysator und getrennt davon einen Aktivator, welche jeweils für die anionische Polymerisation von Lactamen geeignet sind,umfasst, wobei die anionische Polymerisation zur Bildung des Gusspolyamides nicht unmittelbar, d.h. sofort nach dem Inkontaktbringen des Lactams mit dem System aus Katalysator und Aktivator, eintritt.

Darüber hinaus sind hervorragende Kristallisationseigenschaften des Gusspolyamids erforderlich, so dass es eine weitere Aufgabe der vorliegenden Erfindung ist, ein System aus Katalysator und Aktivator zur anionischen Polymerisation von Lactamen bereitzustellen, das gleichzeitig Gusspolyamide mit einer guten Kristallinität ergibt.

Diese Aufgaben werden erfindungsgemäß mit Hilfe eines Systems gelöst, welches
a) mindestens einen Katalysator für die anionische Polymerisation von Lactamen, und
b) mindestens einen Aktivator für die anionische Polymerisation von Lactamen
umfasst, wobei als Aktivator mindenstens ein Uretdion als dimeres cyclisches Isocyanat eingesetzt wird.
Unter einem System im Sinne der vorliegenden Erfindung wird eine Einheit aus
a) mindestens einem Katalysator für die anionische Polymerisation von Lactamen und
b) mindestens einem Uretdion als dimerem cyclischen Isocyanat als erfindungsgemäß zu verwendendem Aktivator für die anionische Polymerisation von Lactamen
verstanden, wobei die Bestandteile a) und b) aufeinander abgestimmt zur anionischen Polymerisation von Lactamen verwendet werden, jedoch nicht zwingend räumlich nebeneinander vorliegen müssen (sogenannter kit-of-part). Allerdings liegen die Bestandteile a) und b) auch räumlich nebeneinander vor. In diesem Kontext wird auch von einer erfindungsgemäßen Zusammensetzung gesprochen.

### Cyclische Isocyanate

Das erfindungsgemäße System bzw. die erfindungsgemäße Zusammensetzung umfasst mindestens einen Aktivator für die anionische Polymerisation von Lactamen, welcher ausgewählt ist aus der Gruppe, bestehend aus cyclischen Isocyanaten und Mischungen davon. Unter Mischungen im Sinne der vorliegenden Erfindung werden sowohl Mischungen von ausschließlich cyclischen Isocyanaten als auch von cyclischen Isocyanaten mit Allophanaten verstanden.

Im Rahmen der vorliegenden Erfindung wird unter einem cyclischen Isocyanat ein cyclisches Umsetzungsprodukt von zwei Isocyanaten unter der Ausbildung von zwei Dioxodiazetidin-Bindungen verstanden:

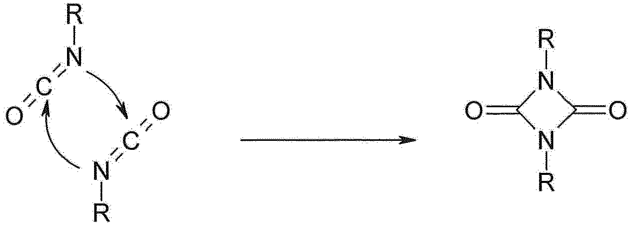

Die Herstellung entsprechender cyclischer Isocyanate ist dem Fachmann an sich bekannt und kann beispielsweise gemäß der in EP 1 422 223 A1 beschriebenen Vorgehensweise unter Verwendung von phosphinhaltigen Katalysatorsystemen erfolgen. Die cyclischen Isocyanate können ferner nach Methoden hergestellt werden, welche in EP 1 521 789 A1 (unter Anwendung 1,2,3- bzw. 1,2,4-Triazolaten als Katalysatoren), dem Artikel "Catalysis in polyisocyanate manufacture", Polymer Preprints (American Chemical Society) 2003, 44(1), 46 - 47 (unter Anwendung von Polyfluoriden als Katalysatoren), EP 1 352 006 A1 (unter Anwendung von Supersäuren als Katalysator) und

EP 0 572 995 A1 (unter Anwendung von imidazolhaltigen Polymeren) beschrieben sind.

Dabei wirken die erfindungsgemäß zu verwendenden cyclischen Isocyanate im Wesentlichen, vorzugsweise jedoch ausschließlich, dadurch, dass unter den Bedingungen der Polyamid-Herstellung eine Öffnung der cyclischen Struktur erfolgt und freie Isocyanate gebildet werden, die dann als die eigentlichen Aktivatoren fungieren. Im Rahmen der vorliegenden Erfindung werden daher besondere Ausführungsformen von maskierten Isocyanaten bereitgestellt.

Das cyclische Isocyanat weist zwei miteinander verknüpfte Isocyanatgruppen, welche in Form von Dioxidazetinbindungen vorliegen, in einem Molekül auf.

Die Temperatur zum Aufbrechen der Struktur des cyclischen Diisocyanats hängt von der genauen Struktur des Aktivators ab. Zum Aufbrechen der cyclischen Struktur des Aktivators sind jedoch Temperaturen im Allgemeinen von 100 bis 160 °C, vorzugsweise von 110 bis 150 °C, erforderlich.

Das cyclische Isocyanat ist dabei ein Dimer, d.h. ein Uretdion. Grundsätzlich ist es möglich, dass das cyclische Diisocyanat auf einem monomeren Isocyanat basiert, welches einen aliphatischen, cycloaliphatischen oder aromatischen Rest aufweist. Im Rahmen der vorliegenden Erfindung wird unter dem Ausdruck "auf Basis von" oder "basiert auf" verstanden, dass das cyclische Diisocyanat durch Cyclisierung ausgehend von dem basierenden (monomeren) Isocyanat erhalten wird.

In dem Fall, dass das cyclische Diisocyanat auf einem aliphatischen oder cyclo-aliphatischen Isocyanat basiert, ist es bevorzugt, dass das diphetische oder cycloaliphatische Isocyanat 6 bis 40 Kohlenstoffatome, besonders bevorzugt 6 bis 15 Kohlenstoffatome, aufweist.

Geeignete Beispiele für cyclische Isocyanate auf Basis von Isocyanaten, die einen aliphatischen oder cycloaliphatischen Rest aufweisen, sind dem Fachmann an sich bekannt und entsprechende monomere Isocyanate umfassen beispielsweise Isophorondiisocyanat, 1,4-Cyclohexyldiisocyanat, 1,1-Methylen-bis-(4-isocyanatocyclohexan), 1,2-Bis-(4-isocyanatononyl)-3-heptyl-4-pentylcyclohexan und Hexamethylen-1,6-diisocyanat. Hierbei ist die Verwendung von Isophorondiisocyanat und Hexamethylen-1,6-diisocyanat bevorzugt.

Darüber hinaus ist es im Rahmen der vorliegenden Erfindung möglich, dass als Aktivator ein cyclisches Isocyanat verwendet wird, welches ausgehend von einem aromatischen Isocyanat erhalten wird. Dieses aromatische Isocyanat weist vorzugsweise 6 bis 20 Kohlenstoffatome, besonders bevorzugt 6 bis 15 Kohlenstoffatome, auf. Entsprechende aromatische monomere Isocyanate können beispielsweise ausgewählt werden aus der Gruppe, bestehend aus 2,4-Diisocyanatotoluol, 2,6-Diisocyanatotoluol, 1,5-Naphthylendiisocyanat, 4,4'-Methylendiphenyldiisocyanat, 1,3-Bis-(3-isocyanato-4-methylphenyl)-2,4-dioxodiazetidin, N,N'-Bis-(4-methyl-3-isocyanatophenyl)-Harnstoff und Tetramethylxylylendiisocyanat. Von diesen aromatischen Isocyanaten sind 2,4-Diisocyanatotoluol, 2,6-Diisocyanatotoluol und 4,4'-Methylen-bis(phenyldiisocyanat) bevorzugt. Insbesondere bevorzugt sind 2,6-Diisocyanatotoluol und 4,4'-Methylen-bis(phenyldiisocyanat).

### Funktionsweise der erfindungsgemäß zu verwendenden Aktivatoren:

Erfindungsgemäß wurde herausgefunden, dass durch die Verwendung eines im Sinne der vorliegenden Erfindung cyclischen Isocyanates als Aktivator die tatsächlich wirkende Spezie in der erfindungsgemäßen Zusammensetzung mit dem Katalysator nicht unmittelbar zur Verfügung steht, sondern erst nach einer gewissen Zeit unter Öffnung der Ringstruktur bei dem cyclischen Isocyanat freigesetzt wird und somit zu einer Verzögerung des Polymerisationsstarts führt. Der Grund hierfür ist, dass die Dioxodiacetidin-Bindung der Uretdiongruppen des cyclischen Isocyanates erst bei höheren Temperaturen gebrochen werden, bevor das monomere Isocyanat entsteht, welches dann als die aktive Spezie fungiert.

Durch die verzögerte Freisetzung des Aktivators ist es insbesondere möglich, große Gusspolyamid-Formteile zu erzeugen, bei welchen eine frühzeitige Einsetzung der Polymerisation im Allgemeinen zu einem nicht homogenen Formteil führen würde.

Darüber hinaus wurde erfindungsgemäß gefunden, dass durch die Verwendung des erfindungsgemäßen Aktivators eine hervorragende Kristallinität des Gusspolyamids erreicht wird.

Bezogen auf den Katalysator umfasst das erfindungsgemäße System (kit-of-parts) bzw. die erfindungsgemäße Zusammensetzung vorzugsweise 5 bis 500 Gew.-%, besonders bevorzugt 10 bis 250 Gew.-%, insbesondere 15 bis 100 Gew.-%, an Aktivator.

Wenn das erfindungsgemäße System bzw. die erfindungsgemäße Zusammensetzung aus mindestens einem Katalysator und mindestens einem erfindungsgemäßen Aktivator zur Gusspolyamid-Herstellung verwendet wird, umfasst die erfindungsgemäße Zusammensetzung vorzugsweise mindestens ein zu polymerisierendes Lactam.

Als Lactame zur Herstellung von Gusspolyamid sind Lactame mit mindestens 4 Kohlenstoffatomen im Ring geeignet. Bevorzugte Lactame sind Caprolactam, Önanthlactam, Capryllactam, Lauryllactam, Laurinlactam sowie deren Mischungen. Besonders bevorzugt wird im Rahmen der vorliegenden Erfindung Caprolactam und Laurinlactam, insbesondere ε-Caprolactam, verwendet. Die erfindungsgemäße Zusammensetzung enthält bevorzugt ausschließlich Lactame als die polymerisationsfähigen Bestandteile, d.h. insbesondere Monomere.

Der Katalysator, welcher im Rahmen der vorliegenden Erfindung in dem erfindungsgemäßen System (kit-of-parts) bzw. der erfindungsgemäßen Zusammensetzung für die anionische Polymerisation von Lactamen verwendet wird, ist dem Fachmann an sich bekannt. Derartige Katalysatoren schließen beispielsweise ein: Alkalimetalle, wie Natrium; Alkalimetallsalze von Lactamen, beispielsweise Caprolactamat, Önanthlactamat, Capryllactamat, Lauryllactamat, Laurinlactamat sowie deren Mischungen; Alkalimetallhydride, beispielsweise Natriumhydrid; Alkalimetallalkoholate, beispielsweise Natriummethanolat; Lactammagnesiumbromid und Lactammagnesiumiodid, wie Caprolactammagnesiumbromid und Caprolactammagnesiumiodid; Alkalimetallhydroxide, beispielsweise Natriumhydroxid und Kaliumhydroxid; und metallorganische Verbindungen, beispielsweise Grignard-Verbindungen.

Im Rahmen der vorliegenden Erfindung sind Alkalimetalllactamate bevorzugt. Besonders bevorzugt wird erfindungsgemäß Natriumcaprylactamat, Natriumcaprolactamat, wie Natrium-ε-Caprolactomat, und Natriumlauryllactamat als Katalysator verwendet.

Am meisten bevorzugt werden Mischungen aus Natriumcaprolactamat und Caprolactam, insbesondere ε-Caprolactam, als Katalysator verwendet.

Die erfindungsgemäße Zusammensetzung weist darüber hinaus bevorzugt mindestens ein funktionelles Additiv für Polyamide auf. Ein mögliches Additiv ist eine Kieselsäure, wie es in der nicht vorveröffentlichten EP-Anmeldung EP 07 122 940.5 offenbart ist. Weitere funktionelle Additive werden beispielsweise ausgewählt aus der Gruppe, bestehend aus:
1. verstärkenden Füllstoffen, beispielsweise Glasfasern, Kohlefasern und Polymerfasern;
2. nicht-verstärkenden Füllstoffen, beispielsweise Calciumsulfat, Calciumcarbonat, Bariumsulfat, Silikaten wie Wollastonit, Kaolin, Glimmer, Hornblende, Quarz, Glaskugeln und PTFE;
3. Flammschutzmitteln, beispielsweise Phosphorverbindungen, wie organische Phosphonate, Triylphosphat, Ammoniumpolyphosphat und halogenierte organische Verbindungen;
4. Formungsmitteln, beispielsweise Silikonöle und hochschmelzende Wachse;
5. Gleit- und Schmiermittel, beispielsweise Öle, wie paraffinische Öle;
6. Antistatikmittel, beispielsweise quaternäre Ammoniumsalze;
7. Mittel zur Erhöhung der thermischen und elektrischen Leitfähigkeit, beispielsweise Ruß, Metalle, Metalloxide und Carbon-Nanotubes;
8. Farbstoffe oder Pigmente;
9. Stabilisatoren, beispielsweise UV-Stabilisatoren, wie Benzophenon-Derivate; Hydrolyseschutzmitteln, wie Carbodiimide, Polycarbodiimide (z.B. Stabaxol der Firma Rhein Chemie Rheinau); Antioxidantien; wie sterisch gehinderte Amine und Phenole;
10. Weichmacher, beispielsweise Adipate und Phthalate;
11. Antiblockmitteln; Trennmittel, beispielsweise Paraffin-Polyethylen- und Montanwachse;
12. Verdickungsmitteln, beispielsweise Vinylaromat-Dien-Copolymeren;
13. Schlagzähmodifikatoren, beispielsweise ABS-Copolymere, Kautschuke oder Polyolefine; und
14. Verarbeitungsadditive bzw. Verarbeitungshilfsstoffe, beispielsweise Reaktivverzögerer und Nukleierungsmittel, wie Molybdändisulfid.

Bevorzugte funktionelle Additive für Polyamide sind verstärkende Füllstoffe; Flammschutzmittel; Mittel zur Erhöhung der thermisch und elektrischen Leitfähigkeit, wie insbesondere Ruß; Stabilisatoren, wie insbesondere Hydrolyseschutzmittel und UV-Stabilisatoren, sowie Schlagzähmodifikatoren.

In einer bevorzugten Ausführungsform der vorliegenden Erfindung wird als funktionelles Additiv für Polyamide mindestens einen verstärkenden Füllstoff, besonders bevorzugt verstärkende Glasfasern, wie z.B. bevorzugte gemahlene Kugelglasfasern.

In einer bevorzugten Ausführungsform der vorliegenden Erfindung enthält eine polymerisationsfähige, d.h. sowohl Katalysator als auch Aktivator enthaltende Zusammensetzung, eine Menge des verstärkenden Füllstoffes von mindestens etwa 15 Gew.-%, besonders bevorzugt mindestens etwa 30 Gew.-%, weiter bevorzugt mindestens etwa 40 Gew.-%, insbesondere bevorzugt mindestens etwa 50 Gew.-%, jeweils bezogen auf die Gesamtmenge der polymerisationsfähigen Zusammensetzung. Ein Additivpaket, welches zur Herstellung einer polymerisationsfähigen, d.h. sowohl Katalysator als auch Aktivator enthaltenen Zusammensetzung verwendet wird, kann gegebenenfalls entsprechend höhere Menge des verstärkenden Füllstoffes erhalten. Die Verwendung von verstärkenden Füllstoffen ist, wie in der nicht vorveröffentlichten europäischen Anmeldung mit dem Anmeldeaktenzeichen EP 07 122 940.5 offenbart, insbesondere in Verbindung mit der Verwendung von Kieselsäure bevorzugt.

Weiterer Gegenstand der vorliegenden Erfindung ist die Verwendung von im Sinne der vorliegenden Erfindung dimeren cyclischen Isocyanaten gegebenenfalls in Kombination mit Allophanaten und/oder cyclischen Isocyanaten als Aktivator in der Herstellung von Gusspolyamiden durch anionische Polymerisation sowie ein Verfahren zur Herstellung von Gusspolyamiden durch anionische Polymerisation von Lactamen, bei welchem als Aktivator mindestens einer verwendet wird, der ausgewählt aus der Gruppe, bestehend aus dimeren cyclischen Isocyanaten.

Die Allophanate weisen dabei die allgemeine Struktur 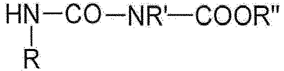 auf.

Diese allophanatgruppenhaltigen Verbindungen sind im Allgemeinen durch Umsetzung beliebiger urethan- und/oder harnstoffgruppenhaltiger Ausgangsverbindungen (enthaltend Einheiten der allgemeinen Formel (R"OOC-NHR') mit Monoisocyanaten der allgemeinen Formel R-NCO oder mit Diisocyanaten der allgemeinen Formel OCN-A-NCO zugänglich, wobei R bzw. A bevorzugt ein Alkylrest mit 1 bis 20 Kohlenstoffatomen oder ein Arylrest mit 6 bis 20 Kohlenstoffatomen ist.

Als Monoisocyanate eignen sich beliebige aromatische, aliphatische und cycloaliphatische Monoisocyanate mit bis zu 20 Kohlenstoffatomen, wie Methylisocyanat, Isopropylisocyanat, n-Butylisocyanat, n-Hexylisocyanat, Cyclohexylisocyanat, Stearylisocyanat, die gegebenenfalls halogenierten Phenylisocyanate, 1-Naphtylisocyanat, die gegebenenfalls chlorierten oder fluorierten m-, o-, und p-Toloylisocyanate, p-Isopropylphenylisocyanat, 2,6-Diisopropylphenylisocyanat und p-Toluolsulfonyldiisocyanat.

Als Diisocyanate eignen sich beliebige aromatische, aliphatische und cycloaliphatische Diisocyanate mit 6 bis 40 Kohlenstoffatomen, vorzugsweise 6 bis 15 Kohlenstoffatomen, wie Isophorondiisocyanat, 1,4-Cyclohexyldiisocyanat, 1,1-Methylen-bis-(isocyanatohexan), 1,2-Bis-(4-Isocyanatononyl)-3-heptyl-4-pentylcyclohexan, Hexamethylen-1,6-diisocyanat, 2,4-Diisocyanatotoluol, 2,6-Diisocyanatotoluol, 1,5-Naphthylendiisocyanat, 4,4'-Methylendiphenyldiisocyanat, 1,3-Bis-(3-isocyanto-4-methylphenyl)-2,4-dioxodiazetidin, N,N'-Bis-(4-methyl-3-isocyanatophenyl)-Harnstoff und Tetramethylxylylendiisocyanat. Bevorzugt hiervon ist Hexamethylen-1,6-diisocyanat.

Ein im Rahmen der vorliegenden Erfindung besonders bevorzugtes Allophanat sind Allophanate der Formel 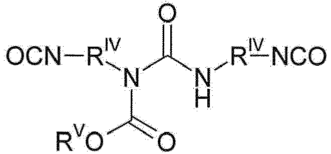 wobei R^{IV} gleich C₁-C₆-Alkyl, vorzugsweise -(CH₂)₆-, und R^{V} gleich C₁-C₆-Alkyl entspricht.

Entsprechende Allophanate sowie deren Herstellung sind beispielsweise in der EP 0 000 194 Al beschrieben, dessen diesbezügliche Offenbarung in die vorliegende Erfindung unter Bezugnahme eingeschlossen wird.

Das für die Allophanatbildung eingesetzte Isocyanat kann, bezogen auf die vorhandenen Urethangruppen der Ausgangsverbindung, im Unterschuss, äquimolar wie auch im Überschuss eingesetzt werden. In letzterem Fall muss das überschüssige Isocyanat nach vollendeter Reaktion nach einer dem Fachmann bekannten Methode, wie z.B. der Destillation oder Extraktion abgetrennt werden. Bevorzugt ist es daher, pro 1,0 mol Urethan- und Harnstoffgruppen der Ausgangsverbindung 0,1 bis 1,0 mol Isocyanat einzusetzen, besonders bevorzugt ist dabei der Einsatz von 0,5 bis 1,0 mol Isocyanat.

Die Allophanat- bzw. Biuretbildung der Urethan- bzw. Harnstoffgruppen durch die Monoisocyanate wird bevorzugt unter Einsatz von Katalysatoren durchgeführt.

Die Verwendung bzw. das Verfahren erfolgt üblicherweise der Gestalt, dass man den Aktivator und den Katalysator jeweils getrennt voneinander in Vorlagen des zu polymerisierenden Lactams eindosiert und die resultierenden Mischungen homogenisiert, so dass der Katalysator und der Aktivator - jeweils getrennt voneinander - in dem zu polymerisierenden Lactam gelöst vorliegen. Die getrennten Mischungen von Katalysator und Aktivator in dem Lactam werden in Abhängigkeit der Art des zu polymerisierenden Lactams bei einer Temperatur hergestellt, bei welcher das Lactam ausreichend fließfähig ist und die Umsetzung erfolgt vorzugsweise bei Temperaturen von 90 bis 160 °C, insbesondere 100 bis 150 °C, besonders bevorzugt 120 bis 140 °C.

Die Menge an erfindungsgemäßem Aktivator, bezogen auf das zu polymerisierende Lactam, beträgt im Allgemeinen 0,01 bis 10 Gew.-%, insbesondere 0,1 bis 5 Gew.-%, speziell 0,5 bis 2,5 Gew.-% (nach Mischung aller Bestandteile einschließlich Katalysator, Aktivator, Lactam und gegebenenfalls von Additiven in der Gussform).

Die Menge an Katalysator ist dem Fachmann an sich bekannt und es können die aus dem Stand der Technik bekannten Mengen verwendet werden.

Nachdem die Vorläufermischungen hergestellt worden sind, werden die resultierenden Mischungen im Allgemeinen in die Form der Gusspolyamid-Herstellung gegeben.

Die Zugabe von gegebenenfalls verwendeten Additiven erfolgt zu einem geeigneten Zeitpunkt vor dem Einsetzen der Polymerisation, beispielsweise in die Vorläufermischungen.

Insbesondere werden im Rahmen dieser Verwendung die oben beschriebenen erfindungsgemäßen Zusammensetzungen angewendet. Die erfindungsgemäße Verwendung dieser Zusammensetzungen zur Herstellung von Polyamiden durch anionische Polymerisation von Lactamen umfasst daher insbesondere die Verwendung der oben beschriebenen erfindungsgemäßen Zusammensetzung, wobei Aktivator und Katalysator üblicherweise zunächst in getrennte Lactamchargen eindosiert und mit dem Lactam homogenisiert werden und dann in der Gussform zusammengeführt werden.

Die erfindungsgemäß einzusetzende Zusammensetzung findet ihre Verwendung sowohl zur Herstellung von Gusspolyamid-Fertigteilen als auch von Gusspolyamid-Halbzeugen und Verbundwerkstoffen. Dabei können drucklose als auch Druckverfahren (zum Beispiel die Reaktionsspritztechnik) eingesetzt werden. Weitere spezifische Verfahren sind das Stand-guss-, Rotationsguss- und Schleudergussverfahren. Ferner können offene oder geschlossene Formen verwendet werden. Dabei werden übliche Formtemperaturen, Heizdauern und Gießzeiten angewendet.

Bei dem nach dem erfindungsgemäßen Verfahren hergestellten Polyamide weisen die resultierenden Polyamid-Zusammensetzungen eine hervorragende Kristallinität auf.

Die vorliegende Erfindung wird anhand der nachfolgenden Beispiele näher erläutert, welche die vorliegende Erfindung jedoch nicht beschränken:

### Beispiel 1:

### Geräte und Reagenzien:

Die Apparatur zur Schmelzaufbereitung besteht aus:
- 2 Dreihalskolben (500 ml) im Ölbad beheizt
- 2 KPG-Rührer mit Hülse
- 2 Gaskappen je 1 mit und 1 ohne Hahn
- 1 Vakuumpumpe mit Kühlfalle, Manometer

Die Apparatur zur Temperaturmessung besteht aus:
- Temperaturmessgerät, z.B. Testo 175-T3 mit IR-Serial Interface
- Thermodraht zum Verbleib in der ausgehärteten Probe
- Becherglas 600 ml (hohe Form)
- Beheizung für das Becherglas (Metallblock, Ölbad)
- Laborstoppuhr (Teilung 1 Sekunde)

### Reagenzien

- Caprolactam trocken (EP > 69 °C)
- Aktivator:
   ∘ dimeres TDI (erfindungsgemäß, kommerziell erhältlich als Addolink^{®} TT von der Rhein Chemie Rheinau GmbH, Mannheim)
   ∘ aliphatische Polyisocanatlösung
- Stickstoff trocken
- Katalysator NL-neu (RheinChemie - Mischung aus Caprolactam und Natriumlactamat)

### Durchführung und Messung:

Kolben A wird mit 196,8 g Caprolactam und 3,2 g Aktivator, Kolben B mit 192 g Caprolactam und 8 g Katalysator NL-Neu beschickt.

Die Schmelzen werden bei 122 °C (± 2 °C) in einem Ölbad unter Vakuum (<15 mbar) 20 Minuten aufbereitet.

Nach Belüften mit Stickstoff werden beide Komponenten in einen Dreihalskolben vereinigt, kurz durchgerührt und in das 600 ml Becherglas überführt.

Die Formtemperatur (Becherglas) sollte auf 160° C temperiert sein.

Unmittelbar nach dem Zusammenführen der Schmelzen in einen Dreihalskolben wird mit der Zeitmessung begonnen.

### Ermittlung der Topfzeit:

Es wird alle 10 Sekunden die Temperatur der polymerisierenden Lactamschmelze gemessen und protokolliert.

Die Zeitdauer der Protokollierung beträgt 15 Minuten. Damit ist sichergestellt, dass auch langsam aushärtende Lactamschmelzen erfasst werden.

In der Regel sind 10 Minuten ausreichend.

Es wird die Kurve der Temperatur der Polymerisationsmischung über die Zeit gemessen, und der Zeitpunkt bestimmt, in dem der Temperaturanstieg maximal ist (Wendepunkt der Temperatur-Zeitkurve). Die Zeit vom Zusammengeben der Reaktionmischungen bis zu dem Zeitpunkt des maximalen Temperaturanstiegs wird als Topfzeit bezeichnet.

**Tabelle 1 zeigt die Ergebnisse.**

| **Beispiel** | **Topfzeit** | **T. (max.) [°C]** |
|---|---|---|
| 1 (Vergleich) | 370 s | 197,0 |
| 2 (erfindungsgemäß) | 660 s | 193,6 |

Wie aus dem Vergleich der Beispiele ersichtlich, tritt unter Verwendung des erfindungsgemäßen Systems eine verzögerte Polymerisation auf.

## Patentansprüche

1. System, enthaltend
a) mindestens einen Katalysator für die anionische Polymerisation von Lactamen; und
b) mindestens einen Aktivator für die anionische Polymerisation von Lactamen,
**dadurch gekennzeichnet, dass**
als Aktivator mindestens ein Uretdion als dimeres cyclisches Isocyanat eingesetzt wird.

2. System nach Anspruch 1, **dadurch gekennzeichnet, dass** das cyclische Isocyanat Uretdioneinheiten aufweist und die Uretdioneinheiten zu einem Oligomer oder Polymer miteinander verbunden sind.

3. System nach einem der Ansprüche 1 bis 2, **dadurch gekennzeichnet, dass** das monomere Isocyanat, auf welchem das cyclische Isocyanat basiert, ein aliphatisches oder cycloaliphatisches Isocyanat mit 6 bis 40 Kohlenstoffatomen, vorzugsweise 6 bis 15 Kohlenstoffatomen, ist.

4. System nach Anspruch 3, **dadurch gekennzeichnet, dass** das aliphatische oder cycloaliphatische Isocyanat ausgewählt ist aus der Gruppe, bestehend aus 1,4-Cyclohexyldiisocyanat, Hexamethylen-1,6-diisocyanat, Isophorondiisocyanat, 1,4-Cyclohexyldiisocyanat, 1,1 -Methylen-bis-(4-isocyanatocyclohexan) und 1,2-Bis-(9-isocyanatononyl)-3-heptyl-4-pentylcyclohexan.

5. System nach Anspruch 2, **dadurch gekennzeichnet, dass** das monomere Isocyanat, auf welchem das cyclische Isocyanat basiert, ein aromatisches Isocyanat mit 6 bis 20 Kohlenstoffatomen ist.

6. System nach Anspruch 5, **dadurch gekennzeichnet, dass** das aromatische Isocyanat ausgewählt aus der Gruppe, bestehend aus Tetramethylxylendilsocyanat, 4,4'-Methylendiphenyldiisocyanat), 2,4-Diisocyanatotoluol, 2,6-Diisocyanatotoluol, 1,5-Naphthylendiisocyanat, 1,3-Bis(3-isocyanato-4-methylphenyl)-2,4-dioxodiazetidin und N,N'-Bis-(4-methyl-3-isocyanatophenyl)-Harnstoff.

7. System nach einem der Ansprüche 1 bis 6, **dadurch gekennzeichnet, dass** der Katalysator für die anionische Polymerisation von Lactamen ausgewählt ist aus der Gruppe, bestehend aus Alkalimetallen, Alkalimetallsalzen von Lactamen, Alkalimetallhydriden, Alkalimetallalkoholaten, Alkalimetallhydroxiden und metallorganischen Verbindungen.

8. Verwendung von mindestens einem Uretdion als dimeren cyclischen Isocyanat gegebenenfalls in Kombination mit Allophanat und/oder cyclischen Isocyanaten als Aktivator zur Herstellung von Gusspolyamiden.

9. Verwendung nach Anspruch 8, **dadurch gekennzeichnet, dass** der Aktivator in Kombination mit mindestens einem Katalysator verwendet werden.

10. Verwendung nach Anspruch 8 oder 9, wobei der Aktivator und/oder der Katalysator als Additivpaket und/oder eine Teilmischung zur Herstellung von Polyamiden durch anionische Polymerisation von Lactamen verwendet wird.

11. Verfahren zur Herstellung von Polyamiden durch anionische Polymerisation von Lactamen unter Verwendung mindestens eines Systems nach einem oder mehreren der Ansprüche 1 bis 7.

## Claims

1. System comprising
a) at least one catalyst for the anionic polymerization of lactams; and
b) at least one activator for the anionic polymerization of lactams,
**characterized in that**
at least one uretdione as dimeric cyclic isocyanate is used as activator.

2. System according to Claim 1, **characterized in that** the cyclic isocyanate comprises uretdione units and the uretdione units are joined to one another to form an oligomer or polymer.

3. System according to either Claim 1 or 2, **characterized in that** the monomeric isocyanate on which the cyclic isocyanate is based is an aliphatic or cycloaliphatic isocyanate having from 6 to 40 carbon atoms, preferably from 6 to 15 carbon atoms.

4. System according to Claim 3, **characterized in that** the aliphatic or cycloaliphatic isocyanate is selected from the group consisting of cyclohexyl 1,4-diisocyanate, hexamethylene 1,6-diisocyanate, isophorone diisocyanate, cyclohexyl 1,4-diisocyanate, 1,1-methylenebis(4-isocyanotocyclohexane) and 1,2-bis(9-isocyanatononyl)-3-heptyl-4-pentylcyclohexane.

5. System according to Claim 2, **characterized in that** the monomeric isocyanate on which the cyclic isocyanate is based is an aromatic isocyanate having from 6 to 20 carbon atoms.

6. System according to Claim 5, **characterized in that** the aromatic isocyanate is selected from the group consisting of tetramethylxylene diisocyanate, 4,4'-methylenedi(phenyl isocyanate), 2,4-diisocyanatotoluene, 2,6-diisocyanatotoluene, naphthylene 1,5-diisocyanate, 1,3-bis(3-isocyanato-4-methylphenyl)-2,4-dioxodiazetidine and N,N'-bis(4-methyl-3-isocyanatophenyl)urea.

7. System according to any of Claims 1 to 6, **characterized in that** the catalyst for the anionic polymerization of lactams is selected from the group consisting of alkali metals, alkaline metal salts of lactams, alkaline metal hydrides, alkali metal alkoxides, alkali metal hydroxides and metal-organic compounds.

8. Use of at least one uretdione as dimeric cyclic isocyanate, optionally in combination with allophanate and/or cyclic isocyanates, as activator for preparing cast polyamides.

9. Use according to Claim 10, **characterized in that** the activator is used in combination with at least one catalyst.

10. Use according to Claim 10 or 11, wherein the activator and/or the catalyst is used as additive packet and/or a partial mixture is used for preparing polyamides by anionic polymerization of lactams.

11. Process for preparing polyamides by anionic polymerization of lactams using at least one system according to one or more of Claims 1 to 7.

## Revendications

1. Système contenant :
a) au moins un catalyseur pour la polymérisation anionique de lactames ; et
b) au moins un activateur pour la polymérisation anionique de lactames,
**caractérisé en ce qu'**au moins une uretdione sous la forme d'un isocyanate cyclique dimère est utilisée en tant qu'activateur.

2. Système selon la revendication 1, **caractérisé en ce que** l'isocyanate cyclique comprend des unités uretdione et les unités uretdione sont reliées les unes avec les autres en un oligomère ou polymère.

3. Système selon l'une quelconque des revendications 1 à 2, **caractérisé en ce que** l'isocyanate monomère, sur lequel l'isocyanate cyclique est fondé, est un isocyanate aliphatique ou cycloaliphatique de 6 à 40 atomes de carbone, de préférence de 6 à 15 atomes de carbone.

4. Système selon la revendication 3, **caractérisé en ce que** l'isocyanate aliphatique ou cycloaliphatique est choisi dans le groupe constitué par le diisocyanate de 1,4-cyclohexyle, le 1,6-diisocyanate d'hexaméthylène, le diisocyanate d'isophorone, le diisocyanate de 1,4-cyclohexyle, le 1,1-méthylène-bis-(4-isocyanatocyclohexane) et le 1,2-bis-(9-isocyanatononyl)-3-heptyl-4-pentylcyclohexane.

5. Système selon la revendication 2, **caractérisé en ce que** l'isocyanate monomère, sur lequel l'isocyanate cyclique est fondé, est un isocyanate aromatique de 6 à 20 atomes de carbone.

6. Système selon la revendication 5, **caractérisé en ce que** l'isocyanate aromatique est choisi dans le groupe constitué par le diisocyanate de tétraméthylxylène, le diisocyanate de 4,4'-méthylènediphényle, le 2,4-diisocyanatotoluène, le 2,6-diisocyanatotoluène, le diisocyanate de 1,5-naphtylène, le 1,3-bis(3-isocyanato-4-méthylphényl)-2,4-dioxodiazétidine et la N,N'-bis-(4-méthyl-3-isocyanatophényl)-urée.

7. Système selon l'une quelconque des revendications 1 à 6, **caractérisé en ce que** le catalyseur pour la polymérisation anionique de lactames est choisi dans le groupe constitué par les métaux alcalins, les sels de métaux alcalins de lactames, les hydrures de métaux alcalins, les alcoolates de métaux alcalins, les hydroxydes de métaux alcalins et les composés métallo-organiques.

8. Utilisation d'au moins une uretdione sous la forme d'un isocyanate cyclique dimère, éventuellement en combinaison avec un allophanate et/ou des isocyanates cycliques, en tant qu'activateur pour la fabrication de polyamides de coulage.

9. Utilisation selon la revendication 10, **caractérisée en ce que** l'activateur est utilisé en combinaison avec au moins un catalyseur.

10. Utilisation selon la revendication 10 ou 11, dans laquelle l'activateur et/ou le catalyseur sont utilisés sous la forme d'un groupe d'additifs et/ou d'un mélange partiel pour la fabrication de polyamides par polymérisation anionique de lactames.

11. Procédé de fabrication de polyamides par polymérisation anionique de lactames, utilisant au moins un système selon une ou plusieurs des revendications 1 à 7.
